Europäisches Patentamt

(19) European Patent Office

Office européen des brevets

(11) Publication number: **0 000 521**

**A1**

(12) **EUROPEAN PATENT APPLICATION**

(21) Application number: **78100397.5**

(22) Date of filing: **14.07.78**

(51) Int. Cl.²: **B 01 D 53/04**

(30) Priority: **18.07.77 US 816639**

(43) Date of publication of application:
**07.02.79 Bulletin 79/3**

(84) Designated contracting states:
**DE FR GB NL SE**

(71) Applicant: **PALL CORPORATION**
**Glen Cove**
**New York. (US)**

(72) Inventor: **Sandman, Leslie**
**196 Tareyton Drive Ithaca,**
**New York 14850. (US)**

(72) Inventor: **McKey Paul**
**17 Therin Drive Hamburg**
**New York 14075. (US)**

(74) Representative: **Gudel, Diether et al**
**Grosse Eschenheimer Strasse 39**
**D-6000 Frankfurt/Main. (DE)**

(54) **A process and an apparatus for fractionating gas mixtures.**

㊼ A process and an apparatus for fractionating gas mixtures by adsorbing a first gas from a mixture thereof with a second gas, to reduce the concentration of the first gas in the mixture to below a desired maximum concentration, in which the adsorption cycle is timed according to the rate of fill through an orifice of a space of predetermined volume by withdrawing a portion of effluent gas, feeding such effluent gas portion into a space of predetermined volume through an adjustable orifice, accumulating the withdrawn effluent gas in the space, and discontinuing the adsorption cycle when the volume and/or pressure of accumulated effluent gas in the space reaches or exceeds a predetermined minimum, thereby making it possible to control the cycling independently of any external control or power source.

FIG. 1a

SPECIFICATION

Adsorption gas fractionators have been marketed for many years, and are in wide use throughout the world. The usual type is made up of two adsorbent beds, one of which is being regenerated while the other is on the adsorption cycle. The gas to be fractionated is passed through one sorbent bed in one direction in the adsorption cycle, and then, after a predetermined time interval, when the sorbent can be expected to have adsorbed so much of the gas being removed that there is a danger that the required low concentration of that gas in the effluent will not be met, the influent gas is switched to the other sorbent bed, and the spent sorbent bed is regenerated by heating and/or by evacuation and/or by passing purge effluent gas therethrough, usually in counterflow, and at a reduced pressure.

Adsorbent gas fractionators on the market today are of two general types, a heat-reactivatable type, in which heat is applied to regenerate the spent sorbent at the conclusion of the adsorbent cycle, and a heatless type, in which heat is not applied to regenerate the spent sorbent at the conclusion of the adsorbent cycle, but in which a purge flow of pure gas, usually effluent gas from the bed on the adsorption cycle, is passed through the spent bed at a lower pressure, with rapid cycling to conserve the heat of adsorption, to aid in the regeneration of the spent bed. The use of a purge gas to regenerate at a lower pressure than the line pressure of the gas being dried is not however confined to heatless types, but is also used in heat-reactivated adsorbent bed fractionators.

Both types of adsorbent gas fractionators are normally operated with fixed-time sorbing and regenerating cycles, usually equal in duration, with the length of the cycles being fixed according to the volume of sorbent available, and the content of the gas to be removed by adsorption from the influent gas mixture. The time of the cycle is invariably fixed and is not in proportion to the volume of influent gas passed through the bed, in order to ensure that the content of the effluent gas will always meet the system requirements.

As the adsorption cycle proceeds, and the total volume of gas passed through the bed increases, the sorbent bed becomes progressively more and more saturated, from the inlet end towards the outlet end, and less and less capable of adsorbing first gas that is carried through it by the influent gas. Removal of the first gas from the influent gas depends upon the rate of flow and the total volume of the gas passed through the bed, and the rate of gas adsorption and total sorbed gas content on the sorbent, as well as the temperature and pressure of gas within the bed. The rate of adsorption by the sorbent may decrease as the sorbent becomes loaded.

Since the volume/flow rate of an influent gas mixture is rarely constant, the demand put upon the sorbent bed can vary. Consequently a fixed time adsorption cycle must always be short enough to give a safe margin for gas removal at maximum first gas content of the influent gas, and this means that frequently a fixed time cycle must be rather short, to be sure it is ended before the available remaining first gas capacity of the bed reaches too low a level. This means, of course, that in the average cycle, the capacity of the sorbent bed may not be well utilized.

The life of a sorbent that is heated in order to regenerate it is to a considerable extent dependent upon the frequency of regeneration. It is a rule of thumb, that a sorbent bed is good for a certain number of regenerations, and no more. Obviously, then, the effective life of a bed may be shortened unnecessarily, whenever during each adsorption cycle before regeneration the capacity for the first gas being removed is not effectively utilized. Furthermore, the inability to achieve a full utilization of the effective bed capacity during each adsorption cycle, both in the case of heat-reactivated and heatless sorbent gas fractionators, means that the volume of the sorbent bed must be more than what might be required to provide the reserve capacity needed to adsorb extreme but occasional high volumes in the influent gas during the fixed time period of the adsorption cycle.

Inefficient utilization of sorbent capacity also leads to a considerable waste of purge gas with each cycle. Purge gas is normally bled off from the effluent gas for the purpose of regeneration of a spent bed, and correspondingly reduces the yield of effluent. Each time a bed is transferred from the adsorption cycle to the regenerating cycle, a volume of purge gas equal to the open volume of the sorbent bed vessel is necessarily dumped, and lost. Short cycling means higher purge losses than long cycling.

Such losses are particularly severe in the case of heatless fractionators, which require much more frequent cycling. Indeed, the

choice between a heat-regenerated and a heatless adsorbent fractiona- tor frequently is dictated by the frequency of recycling required.

Skarstrom in U.S. patent No. 2,944,627, dated July 12, 1960, describes a type of heatless dryer which purports to represent an improvement on those described some years earlier by Wynkoop, U.S. patent No. 2,800,197, dated July 23, 1957, and in British patents Nos. 633,137 and 677,150. Skarstrom showed that by very rapid cycling between adsorption and desorption in the respective zones, the desorption cycle could effectively utilize the heat of adsorption for regeneration of spent desiccant. Skarstrom accordingly taught the use of times in the adsorption cycle not exceeding two to three minutes, preferably less than one minute, and very desirably less than twenty seconds. Such cycling times are of course shorter than Wynkoop's which was of the order of thirty minutes or higher, as shown in the graph of Figure 2, or the cycling times ranging from five minutes to thirty minutes, of British patent No. 633,137. British patent No. 677,150 demonstrated that the adsorption and desorption cycles need not necessarily be equal.

The drawback of the Skarstrom system, however, is the very considerable volume of purge gas lost with each cycle, and this loss is very much greater at a cycling time of, for instance, ten seconds, as compared to the British patents' five to thirty minutes, and Wynkoop's thirty minutes or longer. In the short Skarstrom cycles, of course, the capacity of the desiccant bed is very little utilized, but when no heat is applied to effect regeneration of the desiccant, it becomes more important not to carry the moisture content of the adsorbent beyond a certain minimum on the adsorption cycle, or it will be impossible effectively to regenerate the adsorbent on the regeneration cycle.

Adsorbent gas fractionators have been provided with moisture detectors in the effluent line, to measure dew points in the effluent gas. Because of their slow response, and relative insensitivity to low dew points, however, such devices have not been and cannot be used to determine the cycling of a dryer when an effluent of low dew point or relative humidity is desired, since by the time the detector has sensed moisture in the effluent, the front has broken through the bed.

Seibert and Verrando, U.S. patent No. 3,448,561, patented June 10, 1969, provides a process and apparatus for drying gases which make it possible effectively to utilize the moisture capacity of a desiccant bed by providing for regeneration thereof only when the moisture load on the bed requires it, and thus obtain optimum efficiency in use. During each adsorption cycle, the sorbent can be brought to the limiting moisture capacity at which regeneration can be effected under the available regenerating conditions, whether these be with or without the application of heat, and with or without the application of a reduced pressure. Seibert and Verrando make this possible by detecting the advance of the moisture front within the bed as evidenced by the moisture content of the gas being dried, i.e., as effluent, and halting the drying cycle whenever the front has reached a predetermined point in the bed, short of breaking out of the bed. This can be done automatically by providing in the desiccant bed means for sensing the moisture content of the gas being dried, and means responsive to moisture content to halt the drying cycle whenever a predetermined moisture content in the gas being dried is reached at that point.

The system is effective for gas dryers, but not for adsorbent gas fractionators where other gases are being removed, the presence of which is difficult to detect by automatic sensing means. Moreover, the system requires an accurate sensing, and if the sensing element is nonresponsive, for whatever reason, the permissible maximum concentration of the gas being removed in the effluent may well be exceeded. Furthermore, the system requires external power for powering the detecting sensors, and in the event of failure of the power source, the system becomes inoperative, even though the adsorbent dryer may continue functional. There are many conditions where the effluent purity must be maintained, regardless of emergency conditions affecting energy or power sources.

In accordance with the present invention, a process and apparatus for fractionating gas mixtures are provided which make it possible effectively to time the adsorption cycle of a sorbent bed according to the rate of fill through an orifice of a space of predetermined volume with effluent gas that has passed through the bed, by withdrawing from the effluent gas a portion of effluent gas, passing the withdrawn effluent gas into the space and accumulating the gas there; and sensing the volume or pressure of the accumulated gas. When a predetermined volume of gas has been accumulated, the adsorption

cycle is terminated, and regeneration can begin. Thus, the timing of the adsorption cycle can be made dependent upon the utilization of the bed, and independent of any external energy or power source.

Accordingly, the process of the invention comprises adsorbing a first gas from a mixture thereof with a second gas, to reduce the concentration of the first gas in the mixture to below a desired maximum concentration, passing such effluent gas through an orifice into a space of predetermined volume, withdrawing a portion of effluent gas, accumulating the withdrawn effluent gas in the space, and discontinuing the adsorption cycle when the volume or pressure of accumulated effluent gas reaches or exceeds a predetermined minimum

The volume of effluent gas passed through the sorbent bed and accumulated can be determined directly, as volume, or indirectly, as pressure.

In a preferred embodiment of the process and apparatus of the invention, a portion of effluent gas is withdrawn and collected in a gas accumulator with which a pressure-sensitive sensor is connected, responding to and giving a signal when a predetermined minimum pressure is reached. The signal can actuate mechanically or pneumatically a switch which automatically changes the sorbent bed from adsorption to regeneration, concluding the starting adsorption portion of the adsorption cycle, while the gas collected in the accumulator is dumped. If there is a second sorbent bed, it can simultaneously put the regenerated sorbent bed on stream. A like volume of effluent gas is then collected, in the same proportion, from the second adsorption bed, while the first sorbent bed is being regen-erated, for the second half of the adsorption cycle.

In another embodiment, the volume of gas is accumulated in an expansible reservoir, such as a bellows or a balloon, whose volume at the predetermined limiting volume is such that the expanded reservoir gives a pneumatic or mechanical signal. The reservoir at the predetermined volume may for example release a detent retaining a spring-biased switch from actuation, and in such release actuate a switch which terminates the adsorption.

Pressure-sensitive and volume-sensitive switches are well known and form no part of the instant invention. A pressure-actuated or volume-actuated snap-action switch is preferred, since this gives an immediate response when the predetermined minimum pressure or volume is reached. In any event, to retain independence of cycling control from external power sources, the switch should not of course be electrically operated; it should be pneumatically or mechanically actuated, solely by gas pressure or volume in the accumulator.

Thus, in the process of the invention, the concentration of a first gas in a mixture thereof with a second gas is reduced to below a limiting maximum concentration thereof in the second gas, by passing the mixture in contact with and from one end to another end of a sorbent bed containing a sorbent having a preferential affinity for the first gas; adsorbing first gas thereon to form a gaseous effluent having a concentration thereof below the maximum; separating and collecting a proportion of the effluent gas in an accumulator; and then discontinuing passing the gaseous mixture in contact with the bed whenever the volume or pressure of gas in the accumulator reaches a predetermined minimum.

The process and apparatus of the invention are applicable to gas fractionating systems wherein the sorbent bed is heated to effect regeneration, to systems wherein no heat is applied to effect regeneration, to systems wherein regeneration is effected at reduced pressure, to systems utilizing a purge gas flow, and to systems combining one or more of these features.

As a further feature, in accordance with the invention, since the regeneration cycle need not be, and in most cases is not, of a duration equal to the adsorption cycle, the bed being regenerated can be closed off and heating, purge, evacuation, or whatever regeneration system is used, discontinued when regeneration is complete. The remainder of the cycle time can be used, for instance, for cooling down the regenerated bed, so that it is at a convenient and efficient temperature for adsorption, when the flow of influent gas to that bed is resumed.

The drying apparatus in accordance with the invention comprises, as the essential components, a sorbent bed adapted for periodic and preferably counterflow regeneration; a gas accumulator for collecting a portion of effluent flow from the bed; an effluent gas flow line including an orifice connecting the sorbent bed and the gas accumulator; the orifice restricting effluent gas flow to the gas accumulator to a selected flow rate; and sensing means in communication with the gas accumulator responsive to a predetermined minimum gas volume or pressure in the accumulator to terminate the adsorption cycle after an interval of time corresponding to the rate of effluent gas flow through the orifice.

Optionally, the apparatus includes means for applying heat during regeneration of the sorbent bed.

While the apparatus of the invention can be composed of one sorbent bed, the preferred apparatus employs a pair of sorbent beds, disposed in appropriate vessels, which are connected to the line for reception of influent gas to be fractionated, and delivery of the effluent fractionated gas, with the effluent line in each case being in flow communication with the gas accumulator.

The apparatus can also include a second orifice and/or throttling valve for the purpose of reducing pressure during regeneration, and multiple channel valves for cycling the flow of influent gas between the sorbent beds, and for receiving a flow of effluent gas therefrom, together with check valves to divert a portion of the effluent gas as purge in counterflow through the bed being regenerated.

The time required for the first gas content in the effluent gas to reach a predetermined level is directly correlated with the sorbent capacity for the first gas, and the volume of gas passed through the bed; a cycle time based on worst case inlet conditions is set by adjusting the size of the orifice opening leading to the gas accumulator.

The orifice can be of fixed dimensions. This is satisfactory for use under fixed conditions. Then, if the cycle time has to be adjusted, the orifice can be replaced by another of the required size.

The orifice can also be adjustable by way of a needle or throttling valve, if a variety of conditions can be expected to be encountered, such as with day and night or seasonal variations, differing loads on the system, and differing gas mixtures being sorbed.

The space for gas accumulation is normally limited by practical considerations. For short cycling times, ranging up to several minutes, or slow gas feed rates, the space volume required is not unduly large, and can be provided. However, there are sorbent systems where very long cycle times are possible, and the space required for a gas accumulator impractically large. In such cases the gas accumulator can be combined with a counter, such that when the space is filled to a predetermined pressure it automatically dumps with the counter counting the number of volumes dumped. The cycle time then is set, to terminate the cycle when a predetermined number of dumpings have been recorded. Predetermining pneumatic counters of conventional known types that do not depend on an external power source for operation are preferred.

The apparatus of the invention is illustrated in the following drawings in which:

Figure 1 is a schematic view of a two-bed heatless gas fractionator in accordance with the invention, showing the four stages of a typical adsorption regeneration cycle in the a, b, c and d views, in which:

Figure 1a shows the start of the adsorption cycle, with the left chamber on-stream for adsorption, and the right chamber being regenerated;

Figure 1b shows the next stage of the adsorption cycle, with the left chamber still on-stream, and the right chamber regenerated and undergoing repressurization, to ready it for on-stream adsorption;

Figure 1c shows the next stage of the adsorption cycle, with the left chamber now being regenerated and the right chamber on-stream for adsorption; and

Figure 1d shows the final stage of the adsorption cycle, with the right chamber still on-stream, and the left chamber now regenerated and undergoing repressurization, readying it for on-stream adsorption in the first stage of the next cycle;

Figure 2 is a schematic view of another embodiment of two-bed heatless gas fractionator in accordance with the invention, showing the fractionator in the first stage of the adsorption cycle with the left chamber on-stream for adsorption, and the right chamber being regenerated;

Figure 3 is a schematic view of a further embodiment of two-bed heatless gas fractionator in accordance with the invention, showing the fractionator in the first stage of the adsorption cycle, with the left chamber on-stream for adsorption, and the right chamber being regenerated;

Figure 4 is a schematic view of a further embodiment of two-bed heatless gas fractionator in accordance with the invention, showing the fractionator in the first stage of the adsorption cycle, with the left chamber on-stream for adsorption, and the right chamber being regenerated; and

Figure 5 is a schematic view of a two-bed heat-reactivatable gas fractionator in accordance with the invention, showing the fractionator in the first stage of the adsorption cycle, with the left chamber on-stream for adsorption, and the right chamber being regenerated.

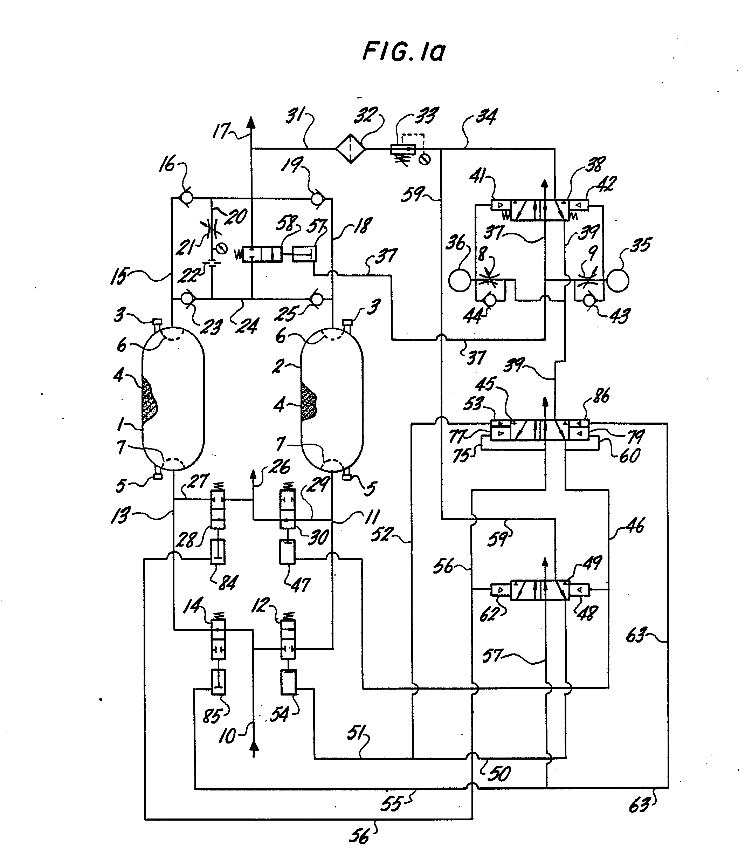

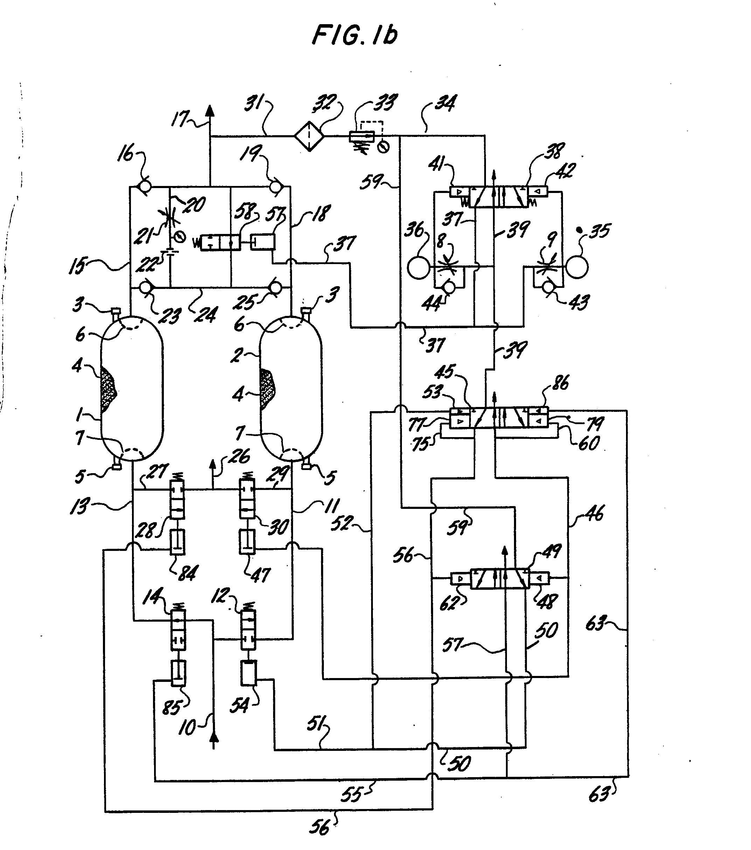

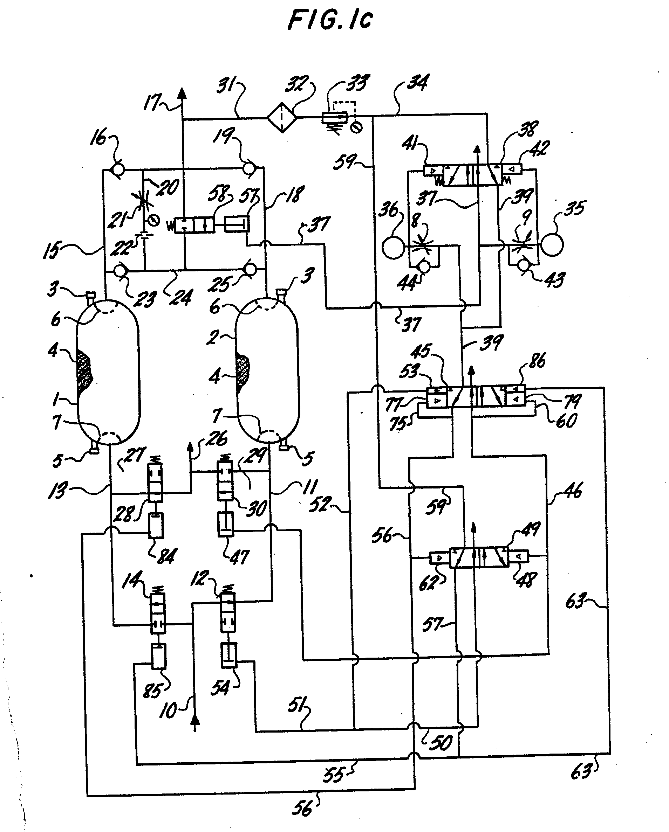

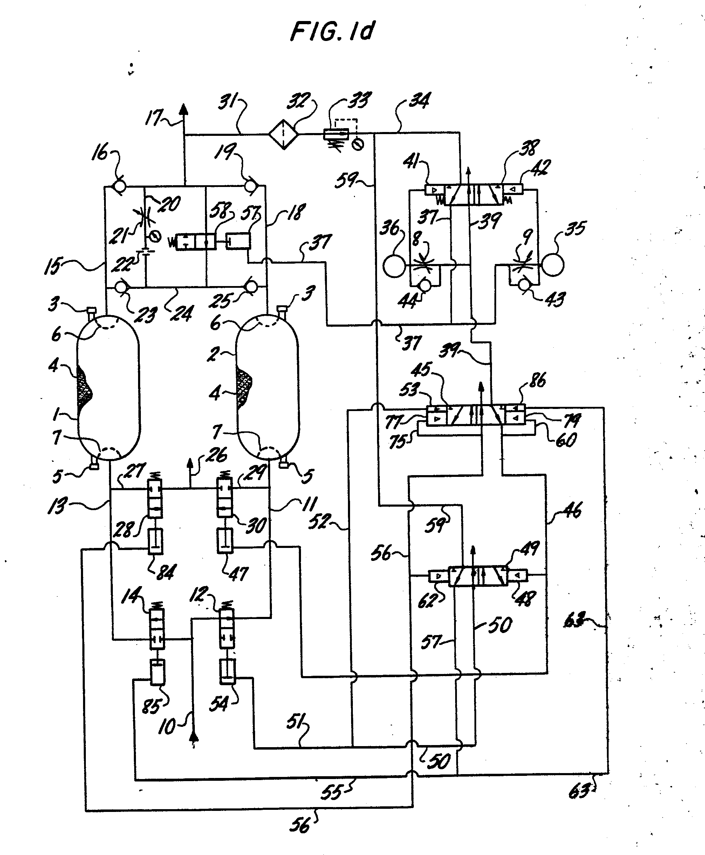

The gas fractionator of Figures 1a, 1b, 1c and 1d is composed of a pair of sorbent vessels 1, 2 which are disposed vertically. Each vessel contains a bed of sorbent 4, such as silica gel. Also provided in the vessels 1, 2 are sorbent fill and drain ports 3, 5 for draining or filling of sorbent in the vessels.

At the bottom of each vessel is a sorbent support 7 made of perforated stainless steel sheet, retaining the sorbent bed 4 in the vessels 1, 2.

At the top of each vessel at the outlet therefrom is filter screen 6, which may be removable and is made of sintered stainless wire mesh or perforated stainless steel sheet. This acts to retain any sorbent particles that might otherwise be carried out from the bed 4 to keep the outlet lines and the remainder of the system clean of such particles.

An extensive system of lines is provided, connecting the two vessels for introduction of influent gas containing a first gas to be removed, and for delivery of effluent gas freed from the first gas after having passed through the sorbent bed in one of the two vessels, with the necessary valves for switching flow of influent and effluent gas to and from each vessel.

This system includes an inlet line 10. The gas from the inlet line 10 can flow to vessel 1 through line 13 past valve 14, or to vessel 2 via line 11 past valve 12. From vessel 1, the effluent gas passes through line 15 past check valve 16 to the effluent line 17, and from vessel 2 the effluent gas passes through line 18 past check valve 19 to the effluent line 17. The check valves 16, 19 prevent the effluent gas from entering the other vessel which is being regenerated while the first vessel is on stream for adsorption.

A portion of the effluent gas flow is used for regeneration. For this purpose, line 20 is provided leading past the pressure-reducing and flow-controlling valve 21 and orifice 22, whence the effluent gas can proceed to the vessel 1 via line 24, past check valve 23, or to tank 2 via lines 24, 18 past check valve 25. The check valves 23, 25 prevent the higher pressure effluent gas while one vessel is on-stream for adsorption from bypassing to the other vessel under regeneration. The purge gas after passing through the vessel being regenerated is exhausted via the outlet line 26, passing from vessel 1 through lines 13, 27 past two-way valve 28, or from tank 2 through lines 11, 29 past two-way valve 30.

A further portion of effluent gas is withdrawn by way of line 31 in accordance with the invention, and led through the pressure regulator 33 and filter 32, and then via line 34 and an orifice controlling feed rate into a gas accumulator, for the purpose of controlling the duration of the adsorption cycle. The line 34 leads to the gas accumulators 35 or 36 according to the position of four-way valve 38, the valve in one position via line 37 feeding gas accumulator 35 on the other side of orifice 9, in this case an adjustable bleed valve, and in the other position via line 39 feeding gas accumulator 36 on the other side of orifice 8, also an adjustable bleed valve.

The four-way valve 38 is switched by snap-action actuators 42, 41, which are actuated when a predetermined minimum gas pressure in gas accumulators 35, 36, respectively, is reached, and actuators 42, 41 are triggered, respectively.

The check valves 43, 44 provide rapid exhaust of accumulators 35, 36 to lines 37, 39 when valve 38 shifts.

At the start of an adsorption cycle, with vessel 1 on stream, the valves 38 and 45 are in the position shown in Figure 1a, valve 38 directing the gas flow from line 34 to line 39 and then through orifice 8 to gas accumulator 36. A portion of gas effluent is thus accumulated, in the volume 36.

Valve 45 directs flow from line 39 via line 46 to actuators 47, 48 and 79 holding valve 30 open and valves 45 and 49 in the position shown in Figure 1a. Flow is directed through valve 49 to line 50 and from line 50 to lines 51 and 52 to actuators 53 and 54 such that vessel 1 is on the adsorption cycle, receiving influent gas from line 10, and vessel 2 is on the regeneration cycle with valve 30 open. Lines 55 and 56 are not connected to line 39, and so are depressurized, so that valve 28 is closed and valve 14 is open.

A snap-actuator 41 is connected to valve 38, and when the gas accumulator 36 has reached a predetermined minimum pressure, the snap-action pressure at which the snap-actuator 41 is actuated is reached, and shifts valve 38, directing gas now through line 37 and orifice 9, and starts charging gas accumulator 35. At the same time, pressure in line 37 trips actuator 57 and opens valve 58.

As shown in Figure 1b line 59 extends from line 34 and is led through valve 49 to line 50 and through line 52 to actuator 53. Depressurization of line 60 through line 37 allows valve 45 to shift, depressurizing line 46, and allowing valve 30 to close. Vessel 2, which has been regenerated in this portion of the cycle, now enters the next portion of the cycle, and repressurizes through valve 58; both vessels 1 and 2 are now at line pressure, with vessel 1 still on-stream.

This next portion of the cycle continues until the pressure in the gas accumulator 35 reaches the predetermined minimum actuation pressure of the snap-actuator 42, whereupon the valve 38 again shifts, directing gas flow now through the line 39. The third portion of the cycle now begins.

As shown in Figure 1c, the interconnection of lines 34 and 39 via valve 38 now pressurizes line 39 to valve 45. Inasmuch as valve 45 has shifted, so that now lines 56 and 39 are interconnected, valve 45 directs flow from line 39 via line 56 to actuators 84, 62 and 77, holding valve 28 open and valves 45 and 49 in the positions shown in Figure 1c. Flow is directed through valve 49 to line 57 and from line 57 to lines 55 and 63 to actuators 86 and 85 such that vessel 2 is on the adsorption cycle, receiving influent gas from line 10 and vessel 1 is on the regeneration cycle with valve 28 open. Lines 46 and 50 are not connected to line 30 and so are depressurized, so that valve 29 is closed and valve 12 is open.

When the gas accumulator 36 has reached a predetermined minimum pressure, vessel 1 has been regenerated, so the snap-actuator 41 shifts valve 38, initiating the last portion of the cycle, as shown in Figure 1d, and repressurization of vessel 1. Upon the shifting of valve 38 as accumulator 35 reaches the predetermined snap-action pressure, this cycle ends, and the next cycle begins.

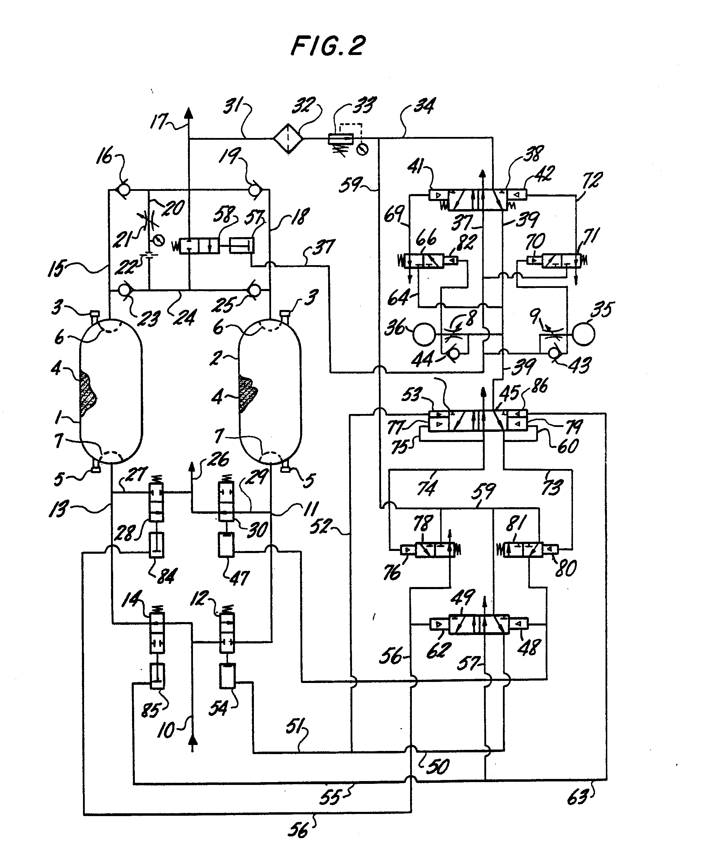

The dryer of Figure 2 is also composed of a pair of desiccant tanks 1, 2 which are disposed vertically. Each tank contains a bed 4 of desiccant such as silica gel. Also provided in the tanks 1, 2 are desiccant fill and drain ports 3, 5, for draining or filling of desiccant in the tanks.

At the bottom of each vessel is a sorbent screen support 7 made of stainless steel mesh and/or perforated stainless steel sheet, retaining the sorbent bed 4 in the vessels 1, 2.

At the top of each vessel at the outlet therefrom is filter screen 6, also made of stainless steel mesh and/or perforated sheet.

This acts to retain any sorbent particles that might otherwise be carried out from the bed 4 to keep the outlet and the remainder of the system clean of such particles.

An extensive system of lines is provided, connecting the two tanks for introduction of influent gas containing moisture to be removed and for delivery of dry effluent gas freed from moisture after having passed through the dryer, with the necessary valves for switching flow of influent and effluent gas to and from each tank. The gas from the inlet line 10 can flow to tank 1 through line 13, past valve 14, or to tank 2 via line 11 past valve 12. From tank 1, the effluent gas passes through line 15 past check valve 16 to the effluent line 17, and from tank 2 the effluent gas passes through line 18 past check valve 19 to the effluent line 17. The check valves 16, 19 prevent the effluent gas from entering the chamber which is being regenerated during the adsorption cycle.

A portion of the effluent gas flow is used for regeneration. For this purpose, line 20 is provided, leading past the pressure-reducing and flow-controlling valve 21 and orifice 22, whence the effluent gas can proceed to the tank 1 past check valve 23 via line 24, or to tank 2 past check valve 25 via line 24. The check valves 23, 25 prevent the higher pressure effluent gas during the adsorption cycle from by-passing to the other tank under regeneration. The pure gas after passing through the tank being regenerated is exhausted via the outlet line 26, passing from tank 1 through line 27 past two-way valve 28, or from tank 2 through line 29 past two-way valve 30

A further portion of effluent gas is withdrawn in accordance with the invention to the gas accumulators 35, 36 for the purpose of timing the adsorption cycle by way of line 31. The line 31 is further subdivided into lines 34 and 59, with effluent gas passing through each line at all times. Line 33 leads via pressure regulator 33 and filter 32 to the gas accumulators 35, 36 via four-way valve 38, and thence by either line 37 or line 39, line 37 feeding gas accumulator 35 via orifice 9, an adjustable bleed valve, and line 39 feeding gas accumulator 36 via orifice 8, an adjustable bleed valve.

Figure 2 shows the position of the valves in the gas accumulator system at the start of the adsorption cycle with tank 1 on-stream, and tank 2 off-stream on the regeneration cycle.

The four-way valve 38 has two positions, in one position charging line 39 with gas flow from line 34 while line 37 is vented, and in the other position charging line 37 with gas flow from line 34 while line 39 is vented. The valve 38 is moved between these two positions by the snap-action actuators 41, 42 of which actuator 42 is actuated at a predetermined pressure reached in gas accumulator 35 via valve 66 while actuator 41 is actuated at a predetermined pressure reached in gas accumulator 36 via valve 71.

The time required for gas accumulator 35 to reach the predetermined pressure is the time for conclusion of the adsorption cycle in the sorbent bed on-stream, and for repressurization of the sorbent bed which has been regenerated, before that bed is placed on-stream for adsorption. The time required for the gas accumulator 36 to reach the predetermined pressure is the time required for the first portion of the adsorption cycle in the sorbent bed on-stream, and for the regeneration of the sorbent bed which is off-stream.

With the valve 38 in the position shown in Figure 2, flow is directed through line 39 and then via orifice 8 to gas accumulator 36. The time before valve 38 is switched is determined by the rate of gas flow through orifice 8 charging accumulator 36, until the predetermined snap-action pressure is reached at which snap-actuator 82 is triggered, whereupon valve 66 is shifted, directing gas from line 39 through lines 64 and 69 to snap-actuator 41, shifting valve 38.

Similarly, when the valve 38 is in this new position, directing flow from line 34 through line 37, the time required for the next shift of valve 38 back to the position shown in Figure 2 is determined by the time required for gas accumulator 35 to be charged through orifice 9. When the predetermined pressure at which snap-actuator 70 is reached, the valve 71 is shifted by the actuator 70, putting line 68 in flow connection with line 72, leading to snap-actuator 42, which then shifts the valve 38 to its first position.

With the switch 38 in the position shown in Figure 2, gas pressure in line 39 is also directed to the four-way two-position valve 45, which in the first position, shown in the Figure, connects line 39 with line 73. In its other position, valve 45 connects line 39 with line 74.

A portion of the gas flow in line 74 is directed through line 75 to snap-actuator 77 holding valve 45 in position. The gas flow is directed through line 74 to snap-actuator 76 on valve 78.

A portion of the gas flow through line 73, as shown in Figure 2, is directed through line 60 to snap-actuator 79, holding valve 45 in position, and gas flow through line 73 is directed to snap-actuator 80, shifting valve 81.

Line 59 also directs effluent gas flow from line 34 to the influent gas/purge gas effluent switching system for the vessels 1. 2, directing such flow to valves 78. 81 and 49. With valve 81 shifted, effluent gas through line 59 is directed to line 46, and there on to snap-actuator 48 and valve operator 47, opening valve 30 and connecting vessel 2 to purge gas vent line 26, and shifting four-way valve 49, respectively. Gas flow through valve 49 is directed from line 59 to line 50. Line 50 is divided into lines 51 and 52. Gas flow is directed through line 52 to snap-actuator 53, while line 51 directs a portion of the gas flow to valve actuator 54, closing valve 12, and disconnecting vessel 2 with the gas influent line 10.

With the valve 38 in the position shown in Figure 2, gas accumulator 36 reaches eventually the actuation pressure of snap-actuator 82, shifting valve 66 and directing gas flow through line 69 to the snap-actuator 41, shifting valve 38. When valve 38 shifts, line 39 is vented and depressurized, exhausting lines 73 and 60. Thereupon, valve 81 shifts, exhausting line 46, and allowing valve 30 to close. Loss of pressure in line 60 depressurizes actuator 79.

allowing valve 45 to shift, inasmuch as pressure is maintained at
actuator 53 via lines 52 and 59 through valve 49. The shifting of
valve 38 directs gas pressure through line 37 to actuator 57,
opening valve 58, and allowing the off-stream chamber 2 to
repressurize, since purge effluent valve 30 is now closed.

With line 37 now in connection with line 34, the gas
accumulator 35 takes over the task of controlling the duration of
this portion of the adsorption cycle. When volume 35 reaches
the snap-pressure of actuator 70, valve 71 shifts, directing gas
flow through line 72 to snap-actuator 42, shifting valve 38, exhausting
line 37 and actuator 57, and allowing valve 58 to close.
Repressurization being complete, the regenerated bed 2 is now
ready to be put on-stream.

The interconnection of lines 34 and 39 via valve 38 now
pressurizes line 39 to valve 45. Inasmuch as valve 45 has shifted,
so that now lines 74 and 39 are interconnected, gas flow is directed
through the valve to line 74 and to actuator 76, shifting valve 78.
This interconnects lines 59 and 56, and gas pressure now pressurizes
the actuator 62 to shift valve 49 and depressurizing lines 50, 51 and 52.
Gas through line 56 causes actuator 84 to open purge effluent valve 28,
putting bed 1 in connection with purge vent line 26, and preparing bed
1 for regeneration. Effluent gas directed through valve 49 is directed
through line 57 to line 55 to actuator 85, closing the valve 14, and
cutting off flow to bed 1 from influent line 10. Gas flow off line 55 is
directed to actuator 86 through line 63, and through line 75 to actuator
77, maintaining valve 45 in this position.

inasmuch as line 50 is exhausted, through the break in the connection with line 38, lines 51 and 50 are depressurized, actuators 53 and 54 are deactivated, allowing valve 12 to open. Bed 2 is now put in connection with influent line 10 and goes on-stream, for adsorption, while bed 1 is put on the regeneration cycle, the duration of the first portion of which is timed by the time required for the gas accumulator 58 to reach the accumulator pressure at which valve 38 is switched, and the cycle is then repeated for the next portion of the adsorption cycle on bed 2.

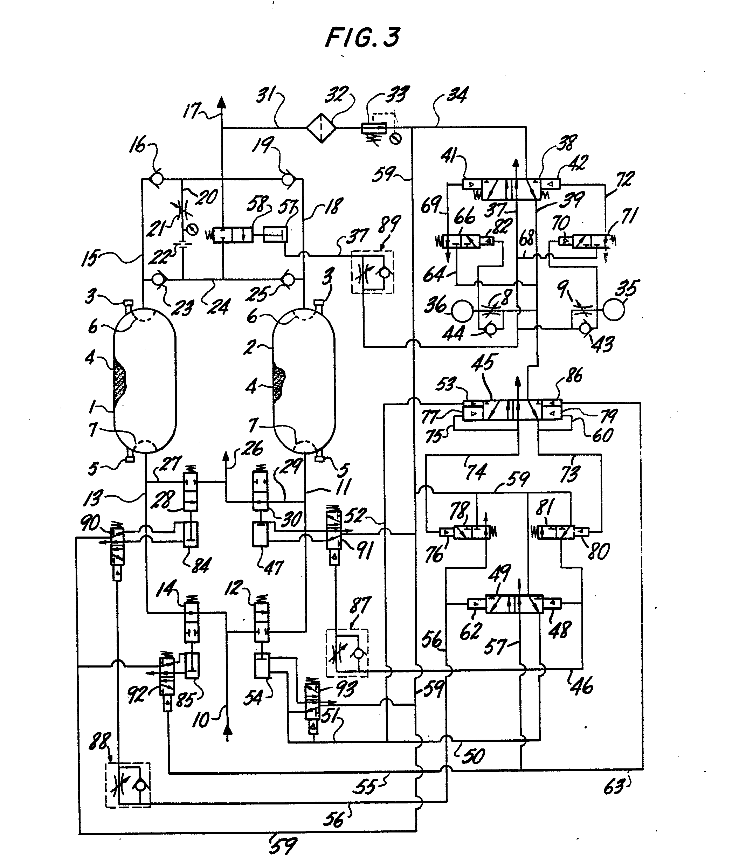

Figure 3 shows another embodiment of heatless dryer similar to that of Figure 1 with the addition of flow control valve 87 in line 46, flow control valve 88 in line 56, and flow control valve 89 in line 37, each operated from lines 46, 56 and 37, respectively, and four four-way interface valves 90, 91, 92 and 93 in line 89.

The actuation time of the valves 28, 30 and 55 is delayed after the pressurization of lines 37, 46 or 56 by the time delay imposed by the flow control valves 87, 88 and 89. Thus, when the valves 78 and 81 as described in conjunction with Figure 2 are switched, the gas pressure is delayed to the actuators 53 and 54, delaying the opening of the valves 28 and 30, and allowing for the complete switching of the inlet valves 14 and 12 prior to the opening of either of valves 28 or 30. Consequently, neither tank 1 nor tank 2 is exhausted to atmosphere before the valves 14 or 12 are switched.

When the valve 38 switches, as described in conjunction with the apparatus of Figure 2, and line 37 is pressurized, the gas pressure is delayed to the valve actuator 57 through the flow control

valve 89, delaying the opening of valve 58 to allow time for exhaust valves 28 or 30 to completely close.

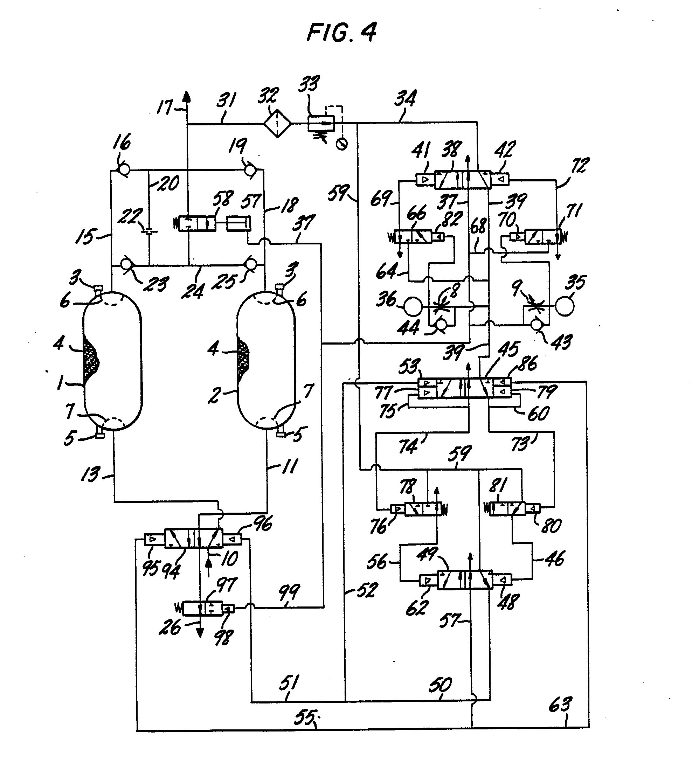

In the embodiment shown in Figure 4, the arrangement is also similar to that of Figure 2, with the exception that the influent gas from line 10 is directed through a four-way five-ported two-position valve 94, whose position is controlled by actuators 95 and 96.

The effluent gas is directed to line 17 from tanks 1, 2 via check valves 16, 19, respectively. The purge gas for regeneration is directed by line 20 through the orifice 22 and thence through either check valve 23 or 25 to the chamber which is on the regeneration cycle. The regenerating purge gas exhausts from the chamber being regenerated through the valve 94, and a two-way normally open exhaust valve 97, and thence is dumped through the line 26 to the atmosphere.

As in the embodiment of Figures 2 and 3, a portion of effluent gas is removed from the line 17 by way of the lines 31, 34 and 59 to control the cycling. Line 31 is directed through pressure regulator 33 and filter 32 and the four-way dual snap-actuated valve 38 to the gas accumulators 35, 36 through bleed valves 9, 8, respectively, by lines 37, 39, respectively. The valve 38 changes position when a pressure is achieved in the gas accumulator 35 or 36 sufficient to operate the actuators 70 or 82. The check valves 44, 43 provide rapid exhaust of the gas accumulators when valves 71, 66 are open.

When the valve 38 directs gas pressure to line 37, regeneration exhaust valve 97 is held closed, allowing the repressurization of the regenerating chamber by means of the orifice 22 and/or valve 58. The inlet switching valve 94 is operated as valves 14 and 12 as described in conjunction with Figure 2.

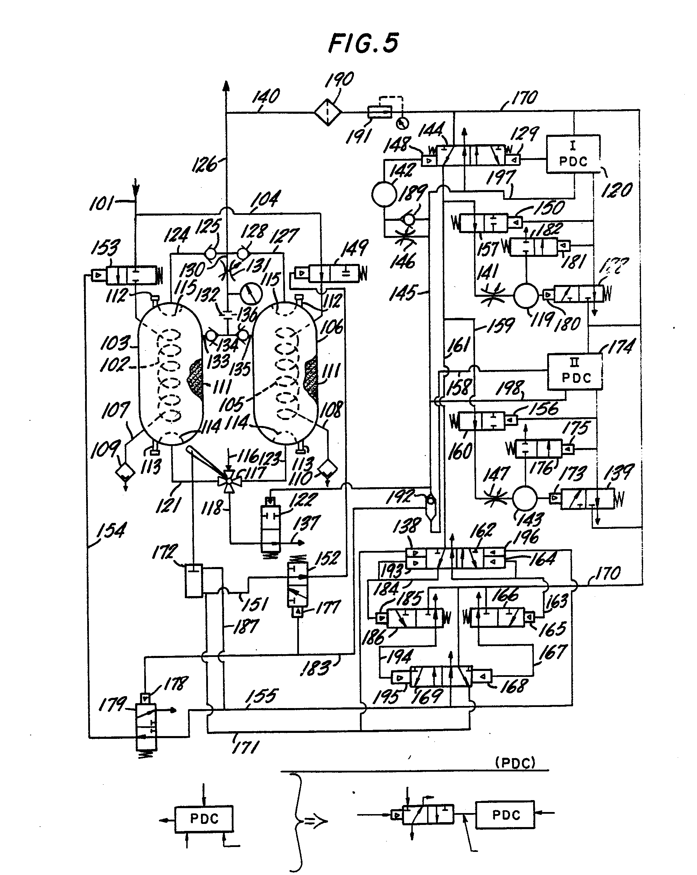

The dryer of Figure 5 is designed to regenerate a spent desiccant bed by a heated effluent gas purge. For this purpose, a steam generator (not shown) is provided, connected by a line 101 with a heating coil 102 in vessel 103 and then connected by a line 104 to a heating coil 105 in vessel 106 and then via either lines 107 or 108 to steam traps either 109 or 110.

The dryer is composed of a pair of sorbent vessels 103, 106 which are disposed vertically. Each vessel contains a bed of sorbent 111, such as silica gel. Also provided in the vessels are sorbent fill and drain ports 112, 113 for draining or filling of sorbent in the vessels. At the bottom of each vessel is a sorbent support 114, made of perforated stainless steel sheet, and at the top of the vessel at the outlet therefrom is a filter screen 115, which may be removable, and is made of stainless steel wire mesh or perforated stainless steel sheet. These screens retain sorbent particles which might otherwise be carried out from the vessels when the vessels are on-stream, and keep the remainder of the system clean of such particles.

The system includes an inlet line 116 leading to a four-way valve 117, switched by actuator 172 which is actuated when a predetermined number of volumes of gas has been accumulated and dumped from the gas accumulator 119, as counted by the predetermining counter 120, which is arranged to trigger the snap-action actuator 121 when the preset count total in the predetermining counter has been reached.

The four-way valve 117 controls the flow of influent gas to one of the vessels 103, 106 and directs purge flow from the other vessel to the pneumatically actuated purge exhaust valve 122. The gas from the inlet line 116 can flow to vessel 103 through line 121, or to vessel 106 via line 123. From vessel 103, the effluent gas passes through line 124 past check valve 125 to the effluent line 126, and from vessel 106 the effluent gas passes through line 127 past check valve 128 to the effluent line 126. The check valves 125, 128 prevent the effluent gas from entering the other vessel which is being regenerated while the first vessel is on stream, for adsorption.

A portion of the effluent gas flow is used for regeneration. For this purpose line 130 is provided, leading past the pressure-reducing and flow-controlling valve 131 and orifice 132, whence the effluent gas can proceed to the vessel 103 via line 133, past check valve 134, directly into the tank 103, or to tank 106 via line 135, past check valve 136. The check valves 134, 136 prevent the higher pressure effluent gas while the vessel is on-stream for adsorption from by-passing to the other vessel under regeneration. The purge gas, after passing through the vessel being regenerated, is exhausted via the outlet line 137 passing through vessel 103, through lines 121, 118 past the other side of four-way valve 117 or from tank 106 throug lines 123, 118, past the other side of four-way valve 117.

A further portion of effluent gas is withdrawn by way of lin 140 in accordance with the invention, and led via an orifice 141 controlling feed rate into a gas accumulator 119 for the purpose of controlling the duration of the adsorption cycle. The line 140 leads to three gas accumulators, 119, 142 and 143, according to the position of the four-way valve 144.

In the position shown in Figure 5, the system is arranged for vessel 103 on-stream for adsorption and vessel 106 being regenerated. The valve 144 in this position feeds via line 145 the gas accumulator 142 on the other side of the orifice 146, in this case an adjustable bleed valve, and in the other position feeding both the gas accumulator 119 and the gas accumulator 143 on the other side of the orifices 141, 147, respectively, in these cases also adjustable bleed valves.

The four-way valve 144 is switched by snap-action actuators 148 and 121 which are actuated when a predetermined minimum gas pressure or number of counts, as for actuator 121, is reached. When a predetermined minimum gas pressure in the gas accumulator 142 is reached the actuator 148 is triggered, shifting valve 144. On the other side, snap-actuator 121 is triggered by the output pulse from the predetermining counter 120.

As shown in Figure 5 at the start of an adsorption cycle, with the vessel 103 on-stream, the four-way valve 117 is in the position shown in Figure 5, directing inlet flow via line 121 to the vessel 103. Effluent gas from the vessel proceeds via line 124 past check valve 125 to the outlet line 126.

A portion of the effluent gas flow passes through check valve 136 and then through vessel 106 for regeneration, emerging via line 123 past the four-way valve 117 on the other side, and then via line 118 past the valve 122 to the exhaust line 137 where it is vented to the atmosphere.

Steam shut-off valve 149 is open, being actuated through lines 150 and 151 via valve 152, and steam valve 153 is closed as lines 154 and 155 are depressurized. Thus, the right hand vessel 106 is being heated on purge while the left hand vessel 103 is on-stream, on the adsorption cycle, drying the process gas.

A further portion of the effluent gas from line 126 passes through line 140 via filter 190 and pressure regulator 191, to the four-way valve 144 which then is in a position to direct flow through line 156 past the snap-actuated valve 157 and orifice 141 into the first volume 119 and through lines 158 and 159, past snap-actuated valve 160 and orifice 147 into the second volume 143.

A portion of gas is also directed through line 161 and directed through valve 162 to line 163, where a portion thereof is directed to actuator 164, maintaining valve 162 in place. Further on, line 163 causes actuator 165 to shift valve 166 such that gas is directed through line 167 to actuator 168, shifting valve 169 and thereby connecting gas effluent line 170 to line 171 causing actuator 172 to move valve 117 to the position shown in Figure 5.

A snap-actuator 173 is connected to the volume 143 and when a predetermined volume has been accumulated, a predetermined minimum gas pressure is reached, at which time the snap-actuator 173 is actuated. This signals the predetermining counter 174 which counts the pulse and at the same time actuates the snap-actuator 175 for valve 176. This dumps the vol... .e ... quickly and then closes, whereupon the volume refills through the orifice 147. Refilling continues to the predetermined minimum pressure at which the snap-actuator 173 is actuated and this again signals the predetermining counter 174, which counts another pulse. This operation continues until the predetermining counter has counted the number of pulses determined in advance which correspond to the length of the heated regeneration cycle. When this number has been counted, the predetermining counter actuates the pneumatic actuators 177 and 178 of valves 152 and 179, respectively. Actuation of valves 152 and 179 vents lines 150 and 154, allowing steam valves 153 and 149 to close, thus terminating the heating cycle. Purge flow continues through orifice 132 and lines 131 and 135 through the vessel 106, cooling the desiccant bed (and structure) in preparation for switching the drying flow to that vessel.

At the same time that predetermining counter 174 starts counting fill-dump cycles, so does predetermining counter 120. Predetermining counter 120 has a cycle time equal to that needed to heat regenerate the off-stream vessel plus the time needed to cool the off-stream cycle. This sum is equal to the drying cycle less the time for repressurization of the off-stream vessel.

A snap-actuator 180 is connected to the volume 119, and when a predetermined volume has been accumulated, a predetermined minimum gas pressure is reached, at which the snap-actuator 180 is actuated. This signals the predetermining counter 120, which counts the pulse and at the same time actuates the snap-actuator 181 for valve 182. This dumps the volume quickly and then closes, whereupon the volume refills through the orifice 141. Refilling continues to the predetermined minimum pressure at which the snap-actuator 180 is actuated, and this again signals the predetermining counter 120, which counts another pulse. This operation continues until the predetermining counter has counted the number of pulses determined in advance, which corresponds to the length of a drying cycle. When this number has been counted, the predetermining counter actuates the snap-actuator 121 shifting the valve 144 and putting the line 170 in connection with the line 145 for the repressurization cycle.

This shifting of valve 144 also vents lines 156, 161 and 159. The venting of line 161 allows for the venting of line 163 through valve 162. This depressurizes actuator 164, allowing valve 162 to shift, as pressure is maintained on actuator 182 through line 183 off line 171. Effluent gas off line 145 closes valve 122 allowing vessel 106 to pressurize through orifice 131 and check valve 136, while also closing both steam valves 149 and 153, with gas flow through shuttle valve 192 activating both valves 152 and 179. Another portion of gas off line 145 passes through lines 197 and 198 for resetting predetermining counters 120 and 174, respectively.

Effluent gas now passes through the orifice 146 into volume 142 where the gas accumulates until a predetermined actuating pressure for the snap-actuator 148 of four-way valve 144 is reached, whereupon the valve again shifts, once again connecting the effluent gas line 140 with line 156. Line 145 depressurizes allowing purge shut-off valve 122 to open and steam valves 149 and 153 to close. Now however

-31-

the valve 162 has shifted, and line 161 is led to line 184 and thusly to actuators 185 and 193, causing valve 186 to shift, with actuator 193 holding valve 162 in place. Valve 186 having shifted connects lines 170 and 194 causing valve 169 to shift as actuator 195 is activated.

Line 171 is now vented through valve 169 and line 155 is pressurized through valve 169 and thereby from line 170. Actuator 196 is pressurized off line 155. Actuator 172 is pressurized through lines 155 and 187, shifting valve 117 and directing inlet flow through valve 117 and line 123 to vessel 106. Steam valve 153 is shifted open by gas flow from line 154 through valve 179 from line 155. The right vessel 106 is on-stream, on the adsorption cycle, for drying, and the left vessel 103 is off-stream being regenerated.

Accordingly, effluent gas flow proceeds past the four-way valve 144 through lines 156, 158 and 159, past snap-actuated valves 157 and 160, and orifices 141 and 147 into volumes 119 and 143, and accumulates until a predetermined minimum pressure at which snap-actuators 180 and 173 are actuated is reached. This sends a pulse to the predetermining counters 120, 174 which sends a pulse to the valves 182 and 176, opening the valves, and dumping the volume. These valves close, and gas once again begins accumulating in the respective volumes. When the predetermined actuating pressure for the snap-actuators 180, 173 are reached, another pulse is sent to the predetermining counters 120, 174, and this continues until the preset count has been reached. This is reached first on predetermining counter 174, terminating the heating cycle, and second on predetermining counter 120, initiating repressurization, both as earlier described, and starting the cycle over again.

The dryer systems of the invention can be used with any type of sorbent adapted to adsorb moisture from gases. Activated carbon, alumina, silica gel, magnesia, various metal oxides, clays, fuller's earth, bone char, and Mobilbeads, and like moisture-adsorbing compounds can be used as the desiccant.

Molecular sieves can also be used, since in many cases these have moisture-removing properties. This class of materials includes zeolites, both naturally-occurring and synthetic, the pores in which may vary in diameter from the order of several angstrom units to from 12 to 15 A. or more. Chabasite and analcite are representative natural zeolites that can be used. Synthetic zeolites that can be used include those described in U.S. patents Nos. 2,442,191 and 2,306,610. All of these materials are well known as desiccants, and detailed descriptions thereof will be found in the literature.

The dryers described and shown in the drawings are all adapted for purge flow regeneration with the purge passing in counterflow to the wet gas influent. This, as is well known, is the most efficient way of utilizing a desiccant bed. As a wet gas passes through a desiccant bed in one direction, the moisture content of the desiccant progressively decreases, and normally the least amount of moisture will have been adsorbed at the outlet end of the bed. It is consequently only sound engineering practice to introduce the regenerating purge gas from the outlet end, so as to avoid driving moisture from the wetter part of the bed into the drier part of the bed, and thus lengthen the regeneration cycle time required. If the purge flow is introduced at the outlet end, then the moisture present there, although it may be in a small amount, will be removed by the purge flow and brought towards the wetter end of the bed. Thus, the bed is progressively regenerated from the outlet end, and all the moisture is carried for the least possible distance through the bed before it emerges at the inlet end.

While the invention has been described with principal emphasis on a desiccant dryer and a process for drying gases, it will be apparent to those skilled in the art that this apparatus with a suitable choice of sorbent can be used for the separation of one or more gaseous components from a gaseous mixture. In such a case, the adsorbed component can also be removed from the sorbent by application of heat, and optionally, in addition, a reduction in pressure, during regeneration. Thus, the process can be used for the separation of hydrogen from petroleum hydrocarbon streams and other gas mixtures containing the same, for the separation of oxygen from nitrogen, for the separation of olefins from saturated hydrocarbons, and the like. Those skilled in the art are aware of sorbents which can be used for this purpose.

In many cases, sorbents useful for the removal of moisture from air can also be used, preferentially to adsorb one or more gas components from a mixture thereof, such as activated carbon, glass wool, adsorbent cotton, metal oxides and clays such as attapulgite and bentonite, fuller's earth, bone char and natural and synthetic zeolites. The zeolites are particularly effective for the removal of nitrogen, hydrogen and olefins, such as ethylene or propylene, from a mixture with propane and higher paraffin hydrocarbons, or butene or higher olefins. The selectivity of a zeolite is dependent upon the pore size of the material. The available literature shows the selective adsorptivity of the available zeolites, so that the selection of a material a particular purpose is rather simple and forms no part of the instant invention.

In some cases, the sorbent can be used to separate a plurality of materials in a single pass. Activated alumina, for example, will adsorb both moisture vapor and carbon dioxide, in contrast to Mobilbeads which will adsorb only water vapor in such a mixture.

The apparatus employed for this purpose will be the same as that described and shown in Figures 1 to 5, inclusive, and the process is also as described, suitably modified according to the proportions of the components to be separated, the operating pressure and temperature and the volume of available sorbent.

It will, however, be understood that the process is of particular application in the drying of gases, and that this is the preferred embodiment of the invention.

- 1 -

## Claims:

1. A process for fractionating gas mixtures which effectively times the adsorption cycle of a sorbent bed in proportion to pressure of effluent of a gas mixture that has passed through the bed, comprising adsorbing a first gas from a mixture thereof with a second gas to reduce the concentration of the first gas in the mixture to below a desired maximum concentration; withdrawing a proportion of effluent gas; accumulating the withdrawn effluent gas; and discontinuing the adsorption cycle when the proportion of accumulated withdrawn effluent gas reaches a predetermined total.

2. A process according to claim 1, in which the predetermined total of withdrawn effluent gas is determined as volume.

3. A process according to claim 1, in which the predetermined total of withdrawn effluent gas is determined as pressure.

4. A process according to claim 1, in which the concentration of a first gas in a mixture thereof with a second gas is reduced to below a limiting maximum concentration thereof in the second gas, by passing the mixture in contact with and from one end to another end of a sorbent bed containing a sorbent having a preferential affinity for the first gas, adsorbing first gas thereon to form a gaseous effluent having a concentration thereof below the maximum, separating and collecting a proportion of the effluent gas, and then discontinuing passing the gaseous mixture in contact with the bed whenever the volume or pressure of collected gas reaches a predetermined amount.

5. A process in accordance with claim 1, which comprises desorbing first gas from the bed by passing a purge flow of gas low in concentration of said first gas in contact with the bed, and then repeating the adsorption and desorption cycles in sequence.

6. A process in accordance with claim 1, which comprises removing sorbed first gas from the bed at an elevated temperature sufficient to desorb said first gas.

7. A process in accordance with claim 1, which includes removing sorbed first gas from the bed at a pressure below the pressure at which adsorption is effected.

8. A process in accordance with claim 1, which includes removing sorbed first gas from the bed at a pressure below atmospheric.

9. A process in accordance with claim 1, which comprises employing two beds of sorbent, a first of which is on a cycle for adsorption of the first gas, while the other of which is on a cycle for desorption of the first gas by a purge flow comprising effluent gas from the first bed.

10. An apparatus for fractionating gas mixtures to remove a first gas from a mixture thereof with another gas which effectively times the adsorption cycle of a sorbent bed in proportion to pressure of effluent of a gas mixture that has passed through the bed, comprising, as essential components, a sorbent bed for adsorbing a first gas and adapted for periodic regeneration; means for withdrawing a proportion of effluent gas from the bed; a gas accumulator for collecting withdrawn effluent gas; and sensing means in communication with the gas accumulator responsive to a predetermined total of withdrawn effluent gas in the accumulator to discontinue the adsorption cycle.

# FIG. 1a

PALL CORPORATION
Case: 222-033 EPO

## FIG.1b

PALL CORPORATION
Case: 222-033 EPO

000521'

# FIG. lc

PALL CORPORATION
Case: 222-033 EPO

# FIG. 1d

PALL CORPORATION
Case: 222-033 EPO

# FIG.2

## FIG.3

PALL CORPORATION
Case: 222-033 EPO

000521

## FIG. 4

PALL CORPORATION
Case: 222-033 EPO

# FIG.5

0000521

## EUROPEAN SEARCH REPORT

Application number

EP 78 10 0397

| Category | Citation of document with indication, where appropriate, of relevant passages | Relevant to claim |
|---|---|---|
| A | US – A – 3 659 399 (G.C.KAUER) ——— | |

**DOCUMENTS CONSIDERED TO BE RELEVANT**

CLASSIFICATION OF THE APPLICATION (Int. Cl.²)

B 01 D 53/04

TECHNICAL FIELDS SEARCHED (Int.Cl.²)

B 01 D 53/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27–10–1978 | BOGAERTS |

EPO Form 1503.1  06.78